(19) Europäisches Patentamt

European Patent Office

Office européen des brevets

(11) **EP 4 617 938 A1**

(12) **EUROPÄISCHE PATENTANMELDUNG**

(43) Veröffentlichungstag:
**17.09.2025 Patentblatt 2025/38**

(21) Anmeldenummer: **24163569.7**

(22) Anmeldetag: **14.03.2024**

(51) Internationale Patentklassifikation (IPC):
**G06F 30/20** (2020.01) **G06Q 10/30** (2023.01)
**B29B 17/00** (2006.01) **G06F 119/20** (2020.01)
**G06F 119/18** (2020.01)

(52) Gemeinsame Patentklassifikation (CPC):
**G06F 30/20; G06Q 10/30;** G06F 2119/18;
G06F 2119/20

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Kördel, Martin**
**81369 München (DE)**
• **Cassignol, Caroline**
**81735 München (DE)**
• **Soller, Thomas**
**94469 Deggendorf (DE)**
• **Schuh, Carsten**
**85598 Baldham (DE)**

(74) Vertreter: **Siemens Patent Attorneys**
**Postfach 22 16 34**
**80506 München (DE)**

(54) **ERMITTLUNG EINES UMWELTRELEVANTEN PRODUKTPARAMETERS**

(57) Es wird ein Verfahren zur Ermittlung wenigstens eines Produktparameters (PP1) für ein Produkt (1) angegeben, wobei durch den Produktparameter (PP1) eine Ökodesign-Anforderung quantifiziert ist. Das Verfahren umfasst die folgenden Schritte:

a) Bereitstellen eines Geometriedatensatzes (GEO) für das Produkt (1) innerhalb einer Entwicklungsumgebung (2) für rechnerunterstütztes Konstruieren, wobei das Produkt (1) innerhalb des Geometriedatensatzes (GEO) in eine Mehrzahl von Teilobjekten unterteilt ist, und wobei zum jeweiligen Teilobjekt ein zugehöriger Materialtyp $(m_1, m_2)$ und eine Angabe über einen zugehörigen Herstellungsprozess $(p_1, p_2)$ festgelegt wird,

b) Bereitstellen eines ersten Datensatzes (D1), welcher für eine Vielzahl von Materialtypen $(m_i)$ jeweils zugeordnete mengenspezifische Materialbeiträge $(mb_i)$ für den zu ermittelnden Produktparameter (PP1) enthält,

c) Bereitstellen eines zweiten Datensatzes (D2), welcher für eine Vielzahl von möglichen Herstellungsprozessen $(p_i)$ jeweils zugeordnete mengenspezifische Prozessbeiträge $(pb_i)$ für den zu ermittelnden Produktparameter (PP1) enthält,

d) Ermitteln einer absoluten Wertzahl des Produktparameters (PP1) innerhalb der Entwicklungsumgebung (2) für rechnergestütztes Konstruieren durch Berücksichtigung von zumindest einem Gesamt-Materialbeitrag $(M_g)$ und einem Gesamt-Prozessbeitrag $(P_g)$, wobei der Gesamt-Materialbeitrag $(M_g)$ auf Basis einer Summierung über Teil-Materialbeiträge $(M_j)$ der einzelnen Teilobjekte gebildet wird und sich diese jeweils als Produkt der Materialmenge $(v_j)$ im Teilobjekt und eines dem jeweiligen Materialtyp $(m_j)$ zugeordneten mengenspezifischen Materialbeitrags $(mb_j)$ ergeben, wobei der Gesamt-Prozessbeitrag $(P_g)$ auf Basis einer Summierung über Teil-Prozessbeiträge $(P_j)$ der einzelnen Teilobjekte gebildet wird und sich diese für das jeweilige Teilobjekt als Produkt der Materialmenge $(v_j)$ und des dem jeweiligen Herstellungsprozess $(p_j)$ zugeordneten mengenspezifischen Prozessbeitrags $(pb_j)$ ergeben.

Weiterhin wird ein entsprechendes Computerprogrammprodukt angegeben.

FIG 2

## Beschreibung

Die vorliegende Erfindung betrifft ein Verfahren zur Ermittlung wenigstens eines Produktparameters für ein Produkt, wobei durch den Produktparameter eine Ökodesign-Anforderung quantifiziert ist. Weiterhin betrifft die Erfindung ein Computerprogrammprodukt zur Ausführung eines solchen Verfahrens.

Aus dem Stand der Technik sind unterschiedliche Verfahren bekannt, um die Umweltauswirkungen von industriellen Produkten abzuschätzen und miteinander zu vergleichen. Am verbreitetsten ist der methodische Ansatz einer sogenannten Lebenszyklusanalyse (LCA für Englisch "life cycle assessment"), bei der eine Ökobilanzierung nach standardisierten Vorgehensweisen vorgenommen wird, insbesondere gemäß den ISO-Normen 14040 und 14044. Hierbei wird eine Sachbilanz aufgestellt, in welcher sowohl die Ressourcenverbräuche als auch umweltrelevante Emissionen (z.B. ein $CO_2$-Ausstoß) erfasst werden. Solche Lebenszyklusanalysen werden häufig verwendet, um unterschiedliche Produkte in Bezug auf ihre Umweltverträglichkeit zu vergleichen oder auch um einzelne Produkte im Hinblick auf die relevanten Bewertungsfaktoren im Verhältnis zu einer Basislinie für die jeweilige Produktgruppe beurteilen zu können. Die standardisierten LCA-Verfahren sind dabei typischerweise sehr aufwendig und erfordern viele manuelle Benutzereingaben, um alle für die Bewertung benötigten Informationen zur Verfügung zu stellen. Ein Nachteil dieser herkömmlichen Bewertungsmethoden ist daher, dass sie meist erst relativ spät im Designprozess auf ein im Wesentlichen fertig designtes Produkt angewendet werden. In diesem späten Designstadium sind aber typischerweise die wesentlichen Entscheidungen, die zu einem umweltfreundlichen Produktdesign beitragen können, schon gefallen. Die quantitative Beschreibung einzelner umweltrelevanter Größen innerhalb des LCA-Verfahrens ist somit zwar nützlich für die Auswahl zwischen alternativen fertigen Produkten, aber nicht für den Designprozess. In den frühen Phasen eines Produktdesigns, in denen z.B. eine Auswahl der verwendeten Materialien und Prozesse und eine Festlegung der Produktgeometrie stattfindet, stehen die Werte für die umweltrelevanten Größen jedoch meist noch nicht zur Verfügung. Dieses Fehlen quantitativer Bewertungsgrößen im frühen Entwicklungsstadium eines Produkts stellt ein wesentliches Hindernis für ein umweltfreundliches Produktdesign dar. Außerdem fehlt eine interaktive Nutzbarkeit solcher quantitativer Bewertungsgrößen innerhalb des Designprozesses. Mit anderen Worten kann mit den bestehenden Werkzeugen kein direkter Bezug zwischen den Designfreiheitsgraden der Konstruktion und den quantitativen umweltrelevanten Kriterien hergestellt werden.

Es sind einzelne Werkzeuge bekannt, um bereits im Designstadium bestimmte Umweltverträglichkeitsfaktoren eines Produkts abzuschätzen. Ein Beispiel hierfür ist das Programm "SOLIDWORKS Sustainability", welches in die Entwicklungsumgebung für rechnergestütztes Konstruieren (CAD für "computer aided design") SOLIDWORKS des Unternehmens Dassault integriert ist. Mit diesem Computerprogramm können bestimmte Umweltauswirkungen wie z.B. $CO_2$-Emissionen, Energieverbrauch sowie Luft- und Wasserverschmutzung in Abhängigkeit von der Menge der eingesetzten Materialien abgeschätzt werden. Die Ergebnisse sind jedoch nur grobe Abschätzungen auf Basis von relativ breit gefassten Materialklassen und gemittelten Werten für die materialspezifischen Umweltauswirkungen. Außerdem werden nur wenige Arten von Umweltauswirkungen berechnet, und diese werden nicht als quantitative Absolutwerte, sondern nur als prozentuale Veränderung gegenüber einer produkttypischen Basislinie dargestellt. Es besteht daher ein Bedarf für eine genauere und universeller einsetzbare Berechnungsmethode für umweltrelevante Produktparameter.

Aufgabe der Erfindung ist es daher, ein Verfahren anzugeben, welches die genannten Nachteile überwindet. Insbesondere soll ein Verfahren zur Ermittlung umweltrelevanter Produktparameter zur Verfügung gestellt werden, welches bereits im Designstadium des Produkts angewendet werden kann und trotzdem eine vergleichsweise genaue, quantitative Bewertung von ein oder mehreren Umweltauswirkungen ermöglicht. Eine weitere Aufgabe ist es, ein Computerprogrammprodukt zur Ausführung eines solchen Verfahrens anzugeben.

Diese Aufgaben werden durch das in Anspruch 1 beschriebene Verfahren und das in Anspruch 15 beschriebene Computerprogrammprodukt gelöst.

Das erfindungsgemäße Verfahren dient zur Ermittlung wenigstens eines Produktparameters für ein Produkt. Dabei wird durch den Produktparameter eine Ökodesign-Anforderung quantifiziert. Das Verfahren umfasst die folgenden Schritte:

a) Bereitstellen eines Geometriedatensatzes für das Produkt innerhalb einer Entwicklungsumgebung für rechnerunterstütztes Konstruieren, wobei das Produkt innerhalb des Geometriedatensatzes in eine Mehrzahl von Teilobjekten unterteilt ist, und wobei zum jeweiligen Teilobjekt ein zugehöriger Materialtyp und eine Angabe über einen zugehörigen Herstellungsprozess festgelegt wird,
b) Bereitstellen eines ersten Datensatzes, welcher für eine Vielzahl von Materialtypen jeweils zugeordnete mengenspezifische Materialbeiträge für den zu ermittelnden Produktparameter enthält,
c) Bereitstellen eines zweiten Datensatzes, welcher für eine Vielzahl von möglichen Herstellungsprozessen jeweils zugeordnete mengenspezifische Prozessbeiträge für den zu ermittelnden Produktparameter enthält,
d) Ermitteln einer Bewertung des Produktparameters innerhalb der Entwicklungsumgebung für rechnergestütztes Konstruieren durch Berücksichtigung von zumindest einem Gesamt-Materialbeitrag und einem Gesamt-Prozessbeitrag,

wobei der Gesamt-Materialbeitrag auf Basis einer Summierung über Teil-Materialbeiträge der einzelnen Teilobjekte gebildet wird und sich diese jeweils als Produkt der Materialmenge im Teilobjekt und eines dem jeweiligen Materialtyp zugeordneten mengenspezifischen Materialbeitrags ergeben,

wobei der Gesamt-Prozessbeitrag auf Basis einer Summierung über Teil-Prozessbeiträge der einzelnen Teilobjekte gebildet wird und sich diese für das jeweilige Teilobjekt als Produkt der Materialmenge und des dem jeweiligen Herstellungsprozess zugeordneten mengenspezifischen Prozessbeitrags ergeben.

Im vorliegenden Zusammenhang sollen die Begriffe "Produkt", "Produktparameter" und "Ökodesign-Anforderung" so verstanden werden, wie sie im Vorschlag für eine EU-Verordnung zur Schaffung eines Rahmens für die Festlegung von Ökodesign-Anforderungen für nachhaltige Produkte vom 30. März 2022 definiert und verwendet werden. Dies gilt auch für weitere Begriffe, die im Folgenden im Zusammenhang mit speziellen Produktparameter verwendet werden. Diese EU-Verordnung soll einen gesetzlichen Rahmen bilden, um Nachhaltigkeits-Anforderungen für zukünftige Produkte innerhalb der Europäischen Union (EU) festzulegen. Das erfindungsgemäße Verfahren dient dazu, einen in diesem Zusammenhang relevanten Ökodesign-Produktparameter quantitativ zu bestimmen und somit die entsprechenden Umweltauswirkungen bereits in der Designphase eines Produkts zu berücksichtigen.

Das genannte "Produkt" muss daher bei der Ausführung des Verfahrens noch nicht als fertiges, physisch existierendes Produkt vorliegen, sondern es reicht aus, wenn es als virtuelles Design und insbesondere in Form eines Geometriedatensatzes innerhalb einer CAD-Entwicklungsumgebung vorliegt. Dies kann auch ein vorläufiger Geometriedatensatz sein, in dem das Produkt noch nicht vollständig in allen Details ausgeformt, sondern nur grob, z.B. über eine einhüllende Form seiner Konturen, definiert ist. Als Teil dieses Geometriedatensatzes ist eine Information darüber bereitgestellt, wie sich die Geometrie des Gesamtprodukts aus mehreren Teilobjekten zusammensetzt. Diese Teilobjekte können z.B. separate Bauteile sein, aus denen das Produkt nachträglich zusammengesetzt wird. Es kann sich aber prinzipiell auch um geometrische Teilabschnitte eines monolithischen Bauteils handeln, welche unterschiedliche Materialzusammensetzungen aufweisen und/oder mit unterschiedlichen Fertigungsmethoden bzw. unterschiedlichen Fertigungsparametern gefertigt werden. Allgemein ist den einzelnen Teilobjekten im Geometriedatensatz jeweils eine Information über das zugehörige Material und auch eine Information über den zugehörigen Herstellungsprozess zugeordnet. Die Teilobjekte können insbesondere jeweils eine im Wesentlichen einheitliche Materialzusammensetzung aufweisen oder zumindest überwiegend aus einem im Wesentlichen einheitlichen Material gebildet sein. Eine Komponente, welche diese Anforderung nicht erfüllt, kann für die Anwendung des erfindungsgemäßen Verfahrens gegebenenfalls in weitere Unter-Teilobjekte unterteilt werden.

Wesentlich im Zusammenhang mit der vorliegenden Erfindung ist, dass wenigstens ein ökodesign-relevanter Produktparameter als Absolutwert auf einer quantitativen Größenskala bestimmt wird (absolute Wertzahl). Dies wird dadurch erreicht, dass eine Summierung über die Beiträge der einzelnen Teilobjekte durchgeführt wird, wobei für das jeweilige Teilobjekt sowohl ein Materialbeitrag als auch ein Prozessbeitrag berücksichtigt wird. Anders ausgedrückt, wird die Wertzahl des Prozessparameters durch Summation von einem Gesamt-Materialbeitrag und einem Gesamt-Prozessbeitrag und gegebenenfalls weiterer relevanter Beiträge gebildet. Der Gesamt-Materialbeitrag ist dabei aus Teil-Materialbeiträgen der einzelnen Teilobjekte zusammengesetzt, und der Gesamt-Prozessbeitrag ist dabei aus Teil-Materialbeiträgen der einzelnen Teilobjekte zusammengesetzt. Dabei soll die Berücksichtigung weiterer Summanden (z.B. von Korrekturtermen und/oder anderen Einflussgrößen) bei der Bildung des Gesamt-Materialbeitrags bzw. des Gesamt-Prozessbeitrags grundsätzlich nicht ausgeschlossen sein. Die einzelnen Teil-Materialbeiträge ergeben sich aus dem Produkt der Materialmenge im jeweiligen Teilobjekt und eines mengenspezifischen Materialbeitrags, welcher abhängig vom Materialtyp unterschiedliche Werte annehmen kann. Solche mengenspezifische Materialbeiträge werden für eine Vielzahl von Materialtypen im ersten Datensatz bereitgestellt, z.B. in einer Datenbank. Dieser Datensatz kann vorteilhaft universell verwendet werden, also mit anderen Worten zur Ermittlung der ökodesign-relevanten Produktparameter für eine Vielzahl unterschiedlicher Produkte eingesetzt werden. Dabei sind die Materialbeiträge spezifisch für den jeweiligen zu ermittelnden Produktparameter, also z.B. für einen Gehalt gefährlicher Stoffe oder eine für die Herstellung des Rohmaterials benötigte Energiemenge. Die einzelnen Materialbeiträge sind innerhalb des ersten Datensatzes als mengenspezifische Größen angegeben, also insbesondere als massenspezifische Beiträge (z.B. pro Kilogramm Material) oder als volumenspezifische Beiträge (z.B. pro Kubikzentimeter Material) oder einer hierzu proportionalen Größe. In analoger Weise ergeben sich die einzelnen Teil-Prozessbeiträge aus dem Produkt der Materialmenge im jeweiligen Teilobjekt und eines mengenspezifischen Prozessbeitrags, welcher abhängig vom Herstellungsprozess und gegebenenfalls auch abhängig vom Materialtyp unterschiedliche Werte annehmen kann. Auch die Prozessbeiträge können in einer universellen Datenbank für eine Vielzahl von möglichen Herstellungsprozessen bereitgestellt werden. Es soll dabei allgemein nicht ausgeschlossen sein, dass einige Material- und/oder Prozessbeiträge zu einem bestimmten Produktparameter auch Null sein können (z.B., wenn in einem Teilobjekt keine besorgniserregenden Stoffe enthalten sind oder wenn ein Prozess keine Emissionen eines bestimmten schädlichen Stoffs bewirkt). Vorteilhaft werden aber für wenigstens einen ermittelten ökodesign-relevanten Produktparameter insgesamt eine Mehrzahl an von Null verschiedenen Teil-Materialbeiträgen und eine Mehrzahl an von Null verschiedenen Teil-Prozessbeiträgen berücksichtigt.

Der Erfindung liegt somit die Erkenntnis zugrunde, dass einige umweltrelevante Produktparameter durch Berücksichtigung von mengenspezifischen Beiträgen der in der Geometrie enthaltenen Teilobjekte quantitativ ermittelt werden können. Dabei wird eine besonders genaue Bestimmung eines quantitativen Zahlenwerts möglich, wenn die einzelnen Teilbeiträge nicht nur nach den verwendeten Materialtypen, sondern auch nach den eingesetzten Herstellungsprozessen differenziert werden. Um zu einem fertigen komplexen Produkt zu gelangen, müssen für die enthaltenen Teilobjekte nicht nur die enthaltenen Materialien zur Verfügung gestellt werden, sondern auch zugehörige Herstellungsprozesse angewandt werden, um das eingesetzte Material in seine endgültige Form im Teilobjekt zu bringen. Die getrennte Berücksichtigung dieser beiden Aspekte führt zu einer wesentlich genaueren Bewertung der Umweltauswirkungen des geplanten Produkts. Wesentlich ist auch, dass nicht nur die Bereitstellung des Geometriedatensatzes, sondern auch das Ermitteln der Wertzahl des Produktparameters innerhalb einer CAD-Entwicklungsumgebung stattfindet oder zumindest als Unterprogramm innerhalb dieser Entwicklungsumgebung aufgerufen wird. Dies kann über die Bereitstellung der mengenspezifischen Material- und Prozessbeiträge in universellen Datensätzen und die Summation der einzelnen Teilbeiträge relativ einfach realisiert werden. Ein wesentlicher Vorteil davon ist, dass einem Produktentwickler die Ergebnisse der Bewertung in-situ innerhalb der Entwicklungsumgebung zur Verfügung gestellt werden können. So kann die Auswirkung von Änderungen in der Geometrie, der Materialauswahl und /oder der Prozessauswahl durch ein direktes Feedback innerhalb der CAD-Umgebung schnell beurteilt werden. Dadurch kann bereits im frühen Stadium eines Produktdesigns, in dem grundlegende Entscheidungen getroffen werden, eine wesentlich stärkere und vor allem quantitative Berücksichtigung der mit dem Produkt verknüpften Umweltauswirkungen erfolgen als dies bisher möglich ist.

Das erfindungsgemäße Computerprogrammprodukt umfasst Befehle, wobei die Befehle bei der Ausführung des Computerprogrammprodukts auf einem Computer diesen dazu veranlassen, das erfindungsgemäße Verfahren auszuführen. Die Vorteile des erfindungsgemäßen Computerprogrammprodukts ergeben sich analog zu den oben erwähnten Vorteilen des erfindungsgemäßen Verfahrens.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Verfahrens auch bei dem Computerprogrammprodukt realisiert werden, und umgekehrt.

So können gemäß einer allgemein vorteilhaften Ausgestaltung des Verfahrens insgesamt mehrere Produktparameter ermittelt werden, wobei durch jeden dieser Produktparameter eine unterschiedliche Ökodesign-Anforderung quantifiziert ist. Insbesondere können mehrere solche Produktparameter gemäß Schritt d) ermittelt werden. Für den jeweiligen Produktparameter können dann insbesondere unterschiedliche, parameterspezifische Material- und Prozessbeiträge berücksichtigt werden. Ein wesentlicher Vorteil dieser Ausführungsform ist, dass auf diese Weise mehrere miteinander konkurrierende Kriterien beim Design innerhalb der CAD-Entwicklungsumgebung vergleichend quantitativ betrachtet und berücksichtigt werden können. So können die einzelnen ökodesign-relevanten Produktparameter z.B. miteinander konkurrieren und/oder diese Parameter können auf unterschiedliche Weise mit anderen Entwicklungszielen wie Kostenkriterien bzw. physikalischen Größen wie Steifigkeit oder Festigkeit in Konkurrenz stehen. Eine in-situ-Ermittlung und Gegenüberstellung von mehreren ökodesign-relevanten Produktparametern kann dazu beitragen, insgesamt einen günstigen Trade-off zwischen solchen konkurrierenden Kriterien und finden und dabei insbesondere die umweltrelevanten Aspekte schon in einer frühen Entwicklungsphase stärker zu berücksichtigen.

Allgemein vorteilhaft kann wenigstens ein durch das Verfahren ermittelter Produktparameter eine materialbezogene Größe sein, also eine Größe, auf welche die Art und Menge des eingesetzten Materials einen signifikanten Einfluss hat. Dabei kann es sich insbesondere um eine materialbezogene Größe aus der folgenden ersten Liste handeln:

- ein Gehalt an recycelten Materialien,
- ein Gehalt an recyclingfähigen Materialien, insbesondere gewichtet mit ihrer Recyclingquote,
- ein Gehalt an Stoffen vordefinierter Stoffklassen, insbesondere ein Gehalt gefährlicher Stoffe, besorgniserregender Stoffe, von Additiven und/oder Verunreinigungen,
- eine Menge an bei der Herstellung entstehenden Abfallstoffen,
- eine Menge an bei der Herstellung insgesamt eingesetzten Ausgangsstoffen und Hilfsstoffen. Diese erste Liste enthält Produktparameter, welche insbesondere im Zusammenhang mit der oben zitierten, geplanten EU-Verordnung eine höhere Relevanz für das Design zukünftiger Produkte erhalten werden. Außerdem handelt es sich bei dieser ersten Liste um Parameter, welche typischerweise nicht oder nur mit vergleichsweise hohem manuellem Aufwand bzw. als ungenaue Schätzung in herkömmlichen LCA-Verfahren ermittelt werden. Mit dem erfindungsgemäßen Verfahren wird ein Weg aufgezeigt, um durch Anwendung von Schritt d) auf einfache Weise und während des Design-Prozesses eine quantitative Bewertung dieser zunehmend relevanten zu Größen zu ermöglichen.

Alternativ oder zusätzlich kann wenigstens ein durch das Verfahren ermittelter Produktparameter eine Größe aus der folgenden zweiten Liste sein:

- eine bei der Herstellung benötigte Prozessenergie und/oder ein bei der Herstellung anfallender Energieverlust,
- eine Menge an bei der Herstellung freigesetzten schädlichen Stoffen, insbesondere an flüchtigen organischen Verbindungen,
- eine für die Herstellung benötigte Wassermenge,
- ein mit der Herstellung zusammenhängender Umweltfussabdruck, insbesondere ein $CO_2$-Fußabdruck.

Auch dies sind Größen, welche durch die oben zitierte, geplante EU-Verordnung und insbesondere deren Anhang I erfasst werden. Die Größen dieser zweiten Liste werden häufig auch innerhalb von herkömmlichen LCA-Bewertungen ermittelt und dargestellt. Allerdings findet die Ermittlung dieser Größen nur selten in-situ innerhalb einer CAD-Entwicklungsumgebung statt. Und wenn dies geschieht, dann werden nur pauschalisierte materialspezifische Beiträge berücksichtigt, aber es wird für ein gegebenes Material nicht nach dem eingesetzten Herstellungsprozess differenziert. Daher leistet die Erfindung auch für diese Größen einen Beitrag zu einer genaueren Ermittlung und damit einer verbesserten Berücksichtigung innerhalb des Entwicklungsprozesses.

Alternativ oder zusätzlich kann wenigstens ein durch das Verfahren ermittelter Produktparameter allgemein eine Größe aus der folgenden dritten Liste sein:

- eine Anzahl an verwendeten Komponenten,
- eine Anzahl an unterschiedlichen verwendeten Arten von Komponenten,
- eine Anzahl an unterschiedlichen verwendeten Typen von Materialien,
- eine Anzahl an unterschiedlichen verwendeten Typen von Objektverbindungen,
- eine Anzahl von benötigten Zerlegungsschritten für ein Produktrecycling,
- eine mittlere Anzahl von Komponenten, die bei einem Zerlegungsschritt freigelegt wird,
- eine Information über ein oder mehrere Typen von verwendeten Objektverbindungen,
- eine Information über ein oder mehrere Typen von verwendeten Komponenten,
- eine Information über ein oder mehrere Typen von Werkzeugen für eine Zerlegung des Produkts,

- eine Information über einen bei der Verwendung benötigten Energietyp,
- eine Information über einen bei der Verwendung benötigten Typ von Betriebsmittel, insbesondere eine chemisch aktive Flüssigkeit und/oder ein chemisch aktives Gas,
- eine Information über die Verwendung standardisierter Komponenten,
- eine erwartete Lebensdauer des Produkts,
- eine vorgesehene Anzahl von Serviceintervallen innerhalb der Lebensdauer.

Auch dies sind Größen, deren Bestimmung durch die geplante EU-Verordnung eine erhöhte Relevanz erhalten wird und deren Bestimmung durch Schritt d) des erfindungsgemäßen Verfahrens ermöglicht oder verbessert wird. Die wenigstens eine Größe gemäß dieser dritten Liste kann besonders vorteilhaft zusätzlich zu ein oder mehreren Größen gemäß der ersten und/oder zweiten Liste ermittelt werden. Dies kann entweder durch eine Ausführungsform von Schritt d) erfolgen oder auch durch ein Verfahren, welches alternativ zu dem beschriebenen Schritt d) ausgeführt wird. Den genannten Größen der dritten Liste ist gemeinsam, dass sie vorteilhaft über ein sogenanntes "Tagging", also durch das Setzen von Markern und/oder Zählern abhängig von den Eigenschaften der im Produkt enthaltenen Teilobjekte und/oder der zwischen den Teilobjekten vorliegenden Verbindungen bestimmt werden können. Allgemein ausgedrückt, kann die wenigstens eine Größe aus der dritten Liste dadurch ermittelt werden, dass für das jeweilige Teilobjekt bzw. die jeweilige Verbindung eine Inkrementierung wenigstens eines für diese Größe charakteristischen Zählers geprüft wird und die Größe abhängig vom Endwert dieses wenigstens einen Zählers bestimmt wird. Alternativ zu dem oben beschriebenen Schritt d) werden hier also nicht unbedingt mengenspezifischen Material- und Prozessbeiträge berücksichtigt, sondern abhängig von den Eigenschaften kann ein Zähler inkrementiert werden, welche für den jeweils betrachteten Produktparameter charakteristisch ist. Auf diese Weise kann z.B. die Anzahl unterschiedlicher Komponenten (z.B. als Teilobjekte) oder Materialien oder eine Information über die Benötigung eines bestimmten Betriebsmittels bei der Verwendung des Produkts ermittelt werden. Auch wenn die Ermittlung der Größe(n) aus der dritten Liste nicht gemäß Schritt d), sondern gemäß solch einem alternativen Zähl-Verfahren erfolgt, ist ihre Ermittlung vorteilhaft im Zusammenspiel mit der Ermittlung von ein über mehreren weiteren Parametern aus der ersten und/oder zweiten Liste gemäß Schritt d), da dann insgesamt eine differenzierte quantitative Betrachtung verschiedener umweltrelevanter Produktparameter durch ein gemeinsames Computerprogramm ermöglicht wird, insbesondere durch ein Unterprogramm der CAD-Entwicklungsumgebung. Auch bei einer solchen zählerbasierten Ermittlung können besonders vorteilhaft sowohl die zugehörigen Materialien als auch die zugehörigen Herstellungsprozesse der einzelnen Teilobjekte berücksichtigt werden. So spielen diese beiden Eigenschaften z.B. bei der Ermittlung der erwarteten Lebensdauer des Produkts eine Rolle, welche sich insbesondere aus den Lebensdauern der kurzlebigsten Teilobjekte ergibt und somit auch durch ein teilobjekt-spezifisches Tagging zugänglich ist.

Allgemein vorteilhaft kann zu dem jeweiligen Teilobjekt die Zuordnung des Materialtyps und/oder eines Herstellungsverfahrens durch eine Benutzereingabe erfolgen. Gemäß einer ersten Variante dieser Ausführungsform kann nach einer erfolgten Zuordnung des Materialtyps eine Liste der hiermit kompatiblen Herstellungsverfahren angezeigt werden, aus denen der Benutzer eine Auswahl treffen kann. Es kann auch dem jeweiligen Material zunächst ein Default-Herstellungsverfahren zugeordnet sein, welches der Benutzer bei Bedarf abändern kann. Gemäß einer zweiten Variante dieser Ausführungsform kann nach einer erfolgten Zuordnung des Herstellungsverfahrens eine Liste der hiermit kompatiblen Materialtypen angezeigt werden, aus denen der Benutzer eine Auswahl treffen kann. Auch hierbei kann dem jeweiligen Herstellungsverfahren zunächst ein Default-Material zugeordnet sein, welches der Benutzer bei Bedarf abändern kann. Es können auch beide Varianten miteinander kombiniert werden, so dass z.B. für manche Teilobjekte zuerst das Material und für andere zuerst das zugehörige Herstellungsverfahren festgelegt wird und danach die jeweils andere Eigenschaft festgelegt wird. Die Entwicklungsumgebung kann so ausgestaltet sein, dass sie dem Benutzer für ein ausgewähltes Material mehrere geeignete Vorschläge für zugehörige Herstellungsverfahren anzeigt und diese gegebenenfalls bereits nach bestimmten vordefinierten ökologischen Kriterien priorisiert. In analoger Weise kann ein solcher Vorschlag bzw. eine solche Priorisierung auch für die geeigneten Materialien zu einem gegebenen Herstellungsverfahren erfolgen.

Gemäß einer weiteren vorteilhaften Ausführungsform kann der erste Datensatz zusätzlich ein oder mehrere physikalische Parameter für den jeweiligen Materialtyp enthalten. Dies kann z.B. eine materialspezifische Dichte und/oder eine Festigkeit sein. Gegebenenfalls kann auch der zweite Datensatz solche physikalischen Parameter in Abhängigkeit vom jeweiligen Herstellungsverfahren enthalten. Durch eine solche Information werden innerhalb der CAD-Entwicklungsumgebung vorteilhaft physikalische Simulationen ermöglicht, mit denen die Einhaltung von Spezifikationen für physikalische Eigenschaften als Randbedingung im Produktdesign überprüft werden kann. So können insbesondere bei der räumlichen Dimensionierung der Teilobjekte und bei der Auswahl von Materialien und Herstellungsverfahren auch die damit verbunden Trade-offs (Zielkonflikte) zwischen ökologischen Aspekten und den Sicherheitsmargen bei der Einhaltung der Spezifikationen berücksichtigt werden. In ähnlicher Weise kann der erste Datensatz und/oder der zweite Datensatz zusätzlich auch Kostenparameter für die eingesetzten Materialien und Herstellungsverfahren enthalten, so dass auch Trade-offs mit finanziellen Kriterien beim Produktdesign berücksichtigt werden können.

Gemäß einer weiteren allgemein vorteilhaften Ausführungsform können der erste und/oder der zweite Datensatz in einer wenigstens einer Datenbank außerhalb der CAD-Entwicklungsumgebung bereitgestellt werden. Mit anderen Worten kann es sich um eine Datenbank mit (aus Sicht der CAD-Entwicklungsumgebung) statischen Daten handeln, welche für die jeweiligen Materialien und/oder Herstellungsprozesse universell festgelegt werden und für ganz unterschiedliche Produktgruppen Gültigkeit besitzen. Diese Datenbanken können, zentral oder dezentral, unabhängig von der CAD-Entwicklungsumgebung zur Verfügung gestellt und gepflegt werden. Sie sind also nicht absolut gesehen statisch, sondern können z.B. bei einer Weiterentwicklung der Materialien und Herstellungsprozesse, aber auch bei der Verfügbarkeit neuer Messverfahren oder einer Änderung der Normen für die Bestimmung der relevanten Produktparameter (z.B. bei einer Änderung der Einstufung von "besorgniserregenden Stoffen") entsprechend angepasst werden. Für den Aufruf von der CAD-Umgebung aus werden sie allerdings als statische Daten betrachtet. Die Datensätze müssen nicht in einer einzigen Datenbank vorliegen, sondern die relevanten Informationen können auch auf mehrere Datenbanken verteilt sein. Gegebenenfalls kann eine zentrale Datenbank einen Zugriff auf weitere Datenbanken mit detaillierteren Informationen zu Beiträgen zu speziellen Produktparametern und/oder zu speziellen Materialien und/oder Herstellungsverfahren ermöglichen. In ähnlicher Weise kann von einer zentralen Datenbank aus ein Programm zur adhoc-Berechnung bestimmter material- und/oder prozessspezifischer Beiträge aufgerufen werden, wenn die entsprechenden Daten nicht bereits als statische Daten zur Verfügung stehen.

Allgemein und unabhängig von der Art der Bereitstellung der Daten können die im zweiten Datensatz enthaltenen mengenspezifischen Prozessbeiträge in Abhängigkeit vom zugehörigen Materialtyp unterschiedliche Werte aufweisen. Dies kann zumindest für eine Teilmenge der möglichen Materialien und/oder der möglichen Herstellungsprozesse gelten. Mit anderen Worten können die einzelnen Prozessbeiträge nicht nur prozess- sondern auch materialspezifisch sein. So können die mit dem Herstellungsverfahren verknüpften Umwelteinflüsse besonders genau quantifiziert werden, da z.B. der Energieaufwand für ein Spritzgussverfahren keine universell feststehende Größe ist, sondern wiederum vom Schmelzpunkt, Schmelzenthalpie, Wärmekapazität usw. des verwendeten Materials abhängt. Allgemeiner ausgedrückt können die Prozessbeiträge der einzelnen Teilobjekte vom jeweils zugeordneten Materialtyp abhängig sein. Die Abhängigkeit der Prozessbeiträge vom Materialtyp kann z.B. auch darin bestehen, dass für einen gegebenen Materialtyp nur bestimmte kompatible Herstellungsverfahren erlaubt sind und andere nicht.

Ebenso ist es allgemein vorteilhaft, wenn die im zweiten Datensatz enthaltenen mengenspezifischen Prozessbeiträge auch spezifisch für das herstellende Unternehmen und/oder für das Herstellungsland festgelegt sind. In ähnlicher Weise können die mengenspezifischen Materialbeiträge im ersten Datensatz spezifisch für das Herstellerunternehmen des Rohmaterials und/oder dessen Herstellungsland festgelegt sein. Auf diese Weise wird es einem Unternehmen ermöglicht, nicht nur auf pauschale Daten zurückzugreifen, sondern Verbesserungen bei den eigenen Prozessen und/oder bei den Zulieferern explizit und quantitativ in einer ökologischen Bewertung zu berücksichtigen.

Gemäß einer allgemein vorteilhaften Ausführungsform von Schritt d) kann beim Ermitteln der Wertzahl des Produktparameters zusätzlich zu den genannten mengenspezifischen Beiträgen wenigstens ein weiterer Beitrag berücksichtigt werden, welcher von der Struktur der Teilobjekte innerhalb des Geometriedatensatzes abhängt. Mit anderen Worten kann bei der Ermittlung des wenigstens einen Produktparameters eine geometrische Information berücksichtigt werden, welche über die reine Materialmenge in den einzelnen Teilobjekten hinausgeht. Es fließen also auch nicht rein mengenspezifische Beiträge in die Ermittlung des Produktparameters ein. Diese zusätzliche geometrische Information kann beispielsweise die Verbindungsfläche benachbarter und miteinander verbundener Teilobjekte und/oder die freie Oberfläche, die Schichtdicke und/oder die Querschnittsfläche einzelner Teilobjekte umfassen. Gemäß einer vorteilhaften Weiterbildung dieser Ausführungsform kann z.B. ein Verbindungsbeitrag berücksichtigt werden, in welche diese zusätzliche geometrische Information über die Verbindung einzelner Teilobjekte eingeht. Alternativ oder zusätzlich können aber auch ein oder mehrere weitere strukturabhängige Beiträge berücksichtigt werden, insbesondere als optionale zusätzliche Summanden im Gesamt-Prozessbeitrag (der dann insgesamt nicht mehr rein mengenspezifisch zusammengesetzt ist). Solche strukturabhängigen Prozessbeiträge können z.B. Beiträge für Nachbehandlungsschritte sein wie Beschichtungs- oder Temperschritte, welche von der freien Oberfläche und/oder der Schichtdicke bzw. der Querschnittsfläche des jeweils relevanten Teilobjekts abhängen können. Allgemein kann eine solche zusätzliche geometrische Information innerhalb der CAD-Entwicklungsumgebung leicht zur Verfügung gestellt werden und ermöglicht so die interaktive Bewertung von umweltrelevanten Produktparametern, welche nicht nur durch mengenspezifische Beiträge, sondern durch komplexere strukturabhängige Zusammenhänge von den Designfreiheitsgraden beeinflusst werden.

Gemäß einer allgemein vorteilhaften Ausführungsform von Schritt d) kann beim Ermitteln der Wertzahl des Produktparameters zusätzlich zu dem Gesamt-Materialbeitrag und dem Gesamt-Prozessbeitrag ein Gesamt-Verbindungsbeitrag berücksichtigt werden. Dieser Gesamt-Verbindungsbeitrag quantifiziert die Beiträge der im Produkt vorliegenden Verbindungen einzelner Komponenten (insbesondere separat hergestellter Teilobjekte) zu dem jeweiligen umweltrelevanten Produktparameter. So kann der Gesamt-Verbindungsbeitrag besonders bevorzugt durch Summierung über Teil-Verbindungsbeiträge für die auszubildenden Verbindungen zwischen einzelnen Teilobjekten gebildet werden. Diese Teil-Verbindungsbeiträge sind wiederum spezifisch für den jeweils betrachteten Produktparameter. Bei den betrachteten Verbindungen handelt es sich insbesondere um nachträglich geschaffene Verbindungen von separat hergestellten Teilobjekten, wie z.B. Lötverbindungen, Klebeverbindungen, Schweißverbindungen und ähnliches. Die Teil-Verbindungsbeiträge können sich beispielsweise für einen gegebenen Verbindungstyp durch Pauschalbeiträge pro Verbindung eines bestimmten Typs und/oder durch flächenspezifische Beiträge pro geschaffener Verbindungsfläche berechnen, wobei die Verbindungsfläche sich wiederum aus dem bereitgestellten Geometriedatensatz ergibt. Der sich insgesamt ergebende Gesamt-Verbindungsbeitrag ist nur ein Beispiel für zusätzliche Beiträge, die optional bei der Bestimmung der Wertzahl des jeweiligen Produktparameters als zusätzliche Summanden berücksichtigt werden können.

Ähnlich wie die Festlegung von Materialtyp und Herstellungsverfahren für die einzelnen Teilobjekte kann auch die Festlegung eines Verbindungstyps für die im Geometriedatensatz vorliegenden Verbindungen einzelner Teilobjekte erfolgen. Auch diese Festlegung kann also z.B. durch eine Benutzereingabe erfolgen. Alternativ kann sie auch zunächst durch einen Default-Verbindungstyp abhängig von den Materialien der jeweiligen Teilobjekte gegen sein, und dieser Default-Verbindungstyp kann gegebenenfalls durch eine Benutzereingabe geändert werden. Die zum jeweiligen Verbindungstyp gehörenden Verbindungsbeiträge können analog zu den Schritten c) und d) in einem dritten Datensatz für eine Vielzahl von möglichen Verbindungstypen bereitgestellt werden. Auch sie können gegebenenfalls abhängig von den zu verbindenden Materialien unterschiedlich festgelegt sein. So ist beispielsweise ein Energieaufwand für ein Schweißverfahren abhängig von den zu verbindenden Materialien, und die Wahl eines Klebers (und die damit zusammenhängenden Umweltauswirkungen) hängt ab von den zu klebenden Materialien.

Ähnlich wie die Festlegung des Materialtyps, des Herstellungsprozesses und des Verbindungstyps können optional auch andere Parameter durch eine Benutzereingabe festgelegt werden. Dies können zum Beispiel andere Eigenschaften komplexerer funktioneller Komponenten sein, die über die reinen Material- und Prozesseigenschaften hinausgehen. Dies können z.B. elektrische Eigenschaften von im Produkt enthaltenen Batterien, Motoren oder Anzeigen sein oder Eigenschaften von enthaltenen Magneten. Abhängig vom Typ einer solchen funktionalen Komponente können wiederum Beiträge zu ausgewählten umweltrelevanten Produktparametern in parametrisierter Form zu Verfügung gestellt werden, z.B. in Form einer spezifizierten Lebensdauer der Komponente.

Allgemein und unabhängig von der Art des Produktparameters und seiner genauen Berechnung kann der wenigstens eine Produktparameter für wenigstens zwei verschiedene Geometriedatensätze ermittelt werden. Dann kann das Verfahren insbesondere den folgenden Schritt aufweisen:

e) Darstellung der Ergebnisse für den wenigstens einen ermittelten Produktparameter mittels einer graphischen Benutzeroberfläche, insbesondere als vergleichende Ansicht in Abhängigkeit von den zugrundeliegenden Geometriedatensätzen.

Hierdurch wird auf besonders einfache Weise eine Bewertung des Einflusses von Produktänderungen auf umweltrelevante Produktparameter ermöglicht. Besonders vorteilhaft ist diese Ausführungsform, wenn im Rahmen des Verfahrens mehrere Produktparameter ermittelt werden und der Einfluss einer geometrischen Änderung, einer Materialänderung und/oder einer Änderung des Herstellungsprozesses und/oder der eingesetzten Verbindungstypen auf diese Vielzahl an Bewertungskriterien beim Produktdesign berücksichtigt werden soll. Auch die Informationen zur Materialzusammensetzung, zum Herstellungsprozess und gegebenenfalls zum Verbindungstyp sollen in diesem Zusammenhang allgemein als Daten des Geometriedatensatzes verstanden werden.

Nachfolgend wird die Erfindung anhand bevorzugter Ausführungsbeispiele unter Bezugnahme auf die angehängten Zeichnungen beschrieben, in denen:

Figur 1     eine vergleichende Darstellung des ökologischen Verbesserungspotentials und der Genauigkeit verschiedener Bewertungswerkzeuge zeigt,

Figur 2     ein schematisches Flussdiagramm für die Durchführung des Verfahrens zeigt und

Figur 3     ein schematisches Diagramm mit verschiedenen Designphasen eines typischen Produktdesign-Prozesses zeigt.

In den Figuren sind gleiche oder funktionsgleiche Elemente mit gleichen Bezugszeichen versehen.

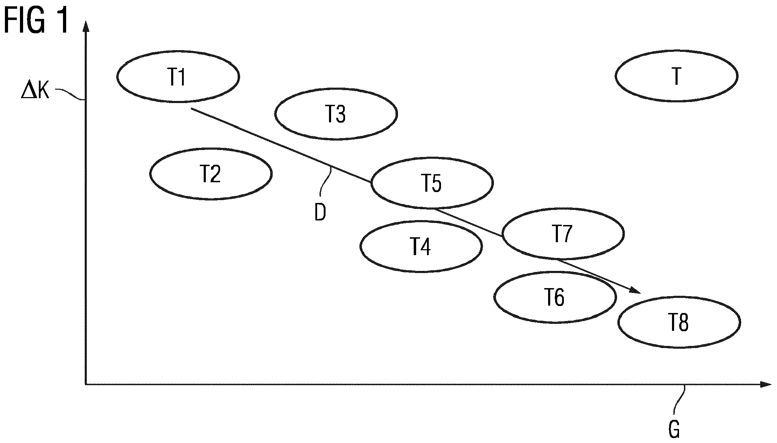

In Figur 1 ist eine vergleichende schematische Darstellung verschiedener existierender Bewertungswerkzeuge T1 bis T8 zur Bestimmung umweltrelevantere Produktparameter gezeigt. Auf der Abszisse des gezeigten schematischen Diagramms ist die Genauigkeit G bei der Bestimmung umweltrelevanter Kenngrößen dargestellt, und auf der Ordinate ist die typische Verbesserung ΔK ökologischer Kenngrößen dargestellt, die mit Hilfe des jeweiligen Werkzeugs erreicht werden kann. Die dargestellten existierenden Bewertungswerkzeuge T1 bis T8 unterscheiden sich dabei zunächst in der Genauigkeit G: Die geringste Genauigkeit weisen typischerweise allgemeine Richtlinien T1 auf, bei deren Anwendung nur eine grobe Beurteilung bestimmter umweltrelevanter Größen stattfindet. Solche Richtlinien T1 werden häufig sehr früh im Designprozess eingesetzt, so dass mit ihrer Anwendung eine vergleichsweise hohe Verbesserung ΔK ökologischer Kenngrößen erreicht werden kann. Die höchste Genauigkeit wird durch eine volle Lebenszyklusanalyse (LCA) T8 erreicht, welche aber typischerweise so spät im Designprozess eingesetzt wird, dass mit dem Feedback aus dieser Bewertung nur noch eine geringe Verbesserung ΔK erreicht wird. Zwischen diesen beiden Extrempunkten sind weitere bekannte Werkzeuge angeordnet, nämlich Listen gefährlicher Stoffe T2, Design-Standards T3, sogenannte MET-Matrizes T4 (MET für Englisch "Material-Energy-Toxicity"), Checklisten T5, verkürzte LCAs T6 und ökologische Kostenanalysen T7. Alle diese Bewertungswerkzeuge liegen im gezeigten Koordinatensystem in der Nähe einer abwärts gerichteten Diagonalen, die hier mit einem Pfeil gekennzeichnet ist und im Wesentlichen einem zeitlich fortschreitenden Designstadium D entspricht. Je später im Designprozess das jeweilige Werkzeug einsetzbar ist, desto höher ist die erreichbare Genauigkeit G, aber desto geringer ist der Hebel ΔK, also die mögliche Verbesserung, die in diesem Stadium in Bezug auf die betrachteten umweltrelevanten Kenngrößen noch erzielt werden kann. Es besteht daher ein genereller Bedarf an einem Bewertungswerkzeug T, mit dem einerseits eine hohe Genauigkeit G erreicht werden kann und welches andererseits so früh im Designprozess einsetzbar ist, dass damit eine große Verbesserung ΔK erzielt werden kann.

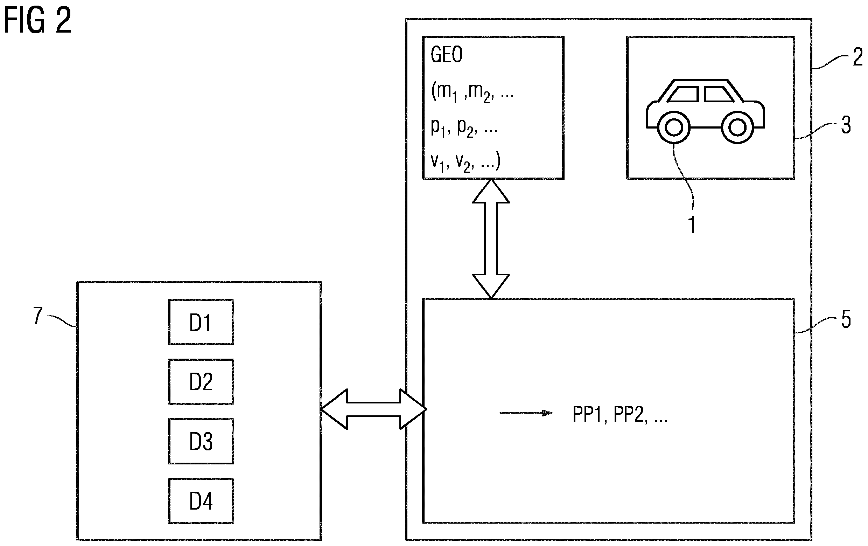

Figur 2 zeigt ein schematisches Flussdiagramm für die Durchführung des Verfahrens nach einem Ausführungsbeispiel der Erfindung. So wird Verfahrensschritt a), also das Bereitstellen eines Geometriedatensatzes GEO für ein Produkt 1, innerhalb einer Entwicklungsumgebung 2 für rechnergestütztes Konstruieren durchgeführt. Es kann sich bevorzugt um einen dreidimensionalen Geometriedatensatz in einem der gängigen Dateiformate von CAD-Entwicklungsumgebungen handeln. Die CAD-Entwicklungsumgebung 2 weist im gezeigten Beispiel eine graphische Benutzerschnittstelle 3 auf, in welcher die Produktgeometrie z.B. aus verschiedenen Perspektiven, verschiedenen Detailgraden und gegebenenfalls auch in Form bestimmter ausgewählter Komponenten angezeigt werden kann. Diese Benutzerschnittstelle 3 ermöglicht auch Eingaben eines Benutzers und die Anzeige von Wertzahlen der Produktparameter, die mit dem erfindungsgemäßen Verfahren berechnet werden. Innerhalb des Geometriedatensatzes GEO ist das Produkt 1 in eine Vielzahl von hier nicht separat dargestellten Teilobjekten unterteilt. Hierbei kann es sich insbesondere um separat hergestellte Komponenten handeln, die beim Herstellen des Gesamt-Produkts miteinander verbunden werden. Als Teil des Geometriedatensatzes liegen beim gezeigten Beispiel weitere Informationen vor. Dies sind insbesondere Daten zu den Materialtypen der einzelnen Teilobjekte, die hier beispielhaft durch die Materialtypen $m_1$ und $m_2$ der ersten beiden Teilobjekte repräsentiert sind. Diese Materialtypen $m_1$, $m_2$, usw. können entweder als Angabe eines speziellen Materials oder auch einer allgemeineren Materialklasse vorliegen. Eine solche Materialklasse kann dabei breit gefasst ein und beispielsweise durch eine Eignung für eine bestimmte Anwendung und/oder einen bestimmten Prozess spezifiziert sein. Beispielsweise kann hier eine Materialklasse angegeben sein, die als Polymer mit einer Eignung zum Aufschmelzen in einem bestimmten Temperaturbereich spezifiziert ist. Die Materialklasse kann auch z.B. über eine Komponente in einem bestimmten relativen Mengenbereich spezifiziert sein, wobei weitere Komponenten zunächst offen sind. Zusätzlich zum Material bzw. der Materialklasse liegen hier Daten zu den Herstellungsprozessen der einzelnen Teilobjekte vor, die hier beispielhaft durch die Herstellungsprozesse $p_1$ und $p_2$ der ersten beiden Teilobjekte repräsentiert sind. Auch hier kann entweder ein spezifischer Herstellungsprozess mit detaillierten Prozessparametern oder auch ein generischer Prozesstyp angegeben sein. Weiterhin liegen hier Daten zu den Materialmengen in den einzelnen Teilobjekten vor, die hier beispielhaft durch die Materialmengen $v_1$ und $v_2$ der ersten beiden Teilobjekte repräsentiert sind. Die Materialmengen können beispielsweise durch die Masse oder das Volumen des eingesetzten Materials ausgedrückt sein. Prinzipiell können diese zusätzlichen Informationen entweder als Teil des Geometriedatensatzes GEO gespeichert sein oder zusätzlich zu diesem innerhalb der Entwicklungsumgebung 2 in irgendeiner Form vorliegen. Insbesondere können die Materialtypen $m_1$, $m_2$ und die Auswahl der Herstellungsprozesse $p_1$, $p_2$ durch eine Benutzereingabe mittels der graphischen Benutzerschnittstelle 3 für die jeweils im Produkt 1 enthaltenen Teilobjekte festgelegt werden.

Innerhalb der CAD-Entwicklungsumgebung 2 ist eine sogenannte Ökodesign-Engine 5 vorhanden, welche mit den übrigen Teilen der Entwicklungsumgebung kommunikativ verknüpft ist. Diese Ökodesign-Engine 5 ist ein Computerprogramm, mit welchem ein oder mehrere umweltrelevante Produktparameter PP1, PP2, usw. quantitativ bestimmt werden können. Dieses Programm ist also zur Ausführung von Schritt d) des Verfahrens ausgelegt. Es empfängt den in der CAD-Entwicklungsumgebung 2 bereitgestellten Geometriedatensatz GEO und die oben beschriebenen zusätzlichen Informationen. Nach der Ermittlung der Produktparameter PP1, PP2 gibt es deren ermittelte Wertzahlen an das Hauptprogramm der CAD-Entwicklungsumgebung 2 zurück, und diese können insbesondere in der dortigen graphischen Benutzerschnittstelle 3 dargestellt werden. Alternativ zu der hier skizzierten modularen Ausführungsform kann die Ökodesign-Engine 5 mit der beschriebenen Funktionalität auch vollständig in die CAD-Entwicklungsumgebung integriert sein. Wesentlich ist, dass das Bestimmen der Wertzahlen für den wenigstens einen Produktparameter PP1 in dem Sinne "innerhalb der CAD-Entwicklungsumgebung" erfolgt, dass das hierfür benötigte Programm 5 von der Entwicklungsumgebung 2 aus aufgerufen wird und die ermittelten Ergebnisse in der Entwicklungsumgebung 2 zur Verfügung gestellt werden und insbesondere dort dargestellt werden. Zweckmäßig kann die Ökodesign-Engine als Plug-In, also als modulare Programmkomponente, innerhalb der CAD-Entwicklungsumgebung zur Verfügung gestellt werden.

Die Ökodesign-Engine 5 ist kommunikativ mit einer Datenbank 7 verknüpft, in welcher eine Mehrzahl von Datensätzen D1 bis D4 bereitgestellt wird. Die gezeigten Datensätze D1 bis D4 sind nur beispielhaft zu verstehen, und es können auch mehr oder weniger Datensätze bereitgestellt werden, wobei diese Daten auch über mehrere Datenbanken verteilt sein können. Wesentlich ist nur, dass das die Ökodesign-Engine 5 Zugriff auf im Wesentlichen statische Daten erhält, die also von der Entwicklungsumgebung 2 und deren Ökodesign-Engine 5 nicht beeinflusst werden. Hierzu kann die wenigstens eine Datenbank 7 insbesondere außerhalb der CAD-Entwicklungsumgebung 2 vorgehalten werden. Dies ist jedoch nicht zwingend erforderlich. Im ersten Datensatz D1 werden gemäß Schritt b) des Verfahrens für eine Vielzahl von möglichen Materialtypen jeweils mengenspezifische Materialbeiträge für den zu ermittelnden wenigstens einen Produktparameter (z.B. PP1) bereitgestellt. Im zweiten Datensatz D2 werden gemäß Schritt c) des Verfahrens für eine Vielzahl von möglichen Herstellungsprozessen jeweils mengenspezifische Prozessbeiträge für den zu ermittelnden Produktparameter (z.B. PP1) bereitgestellt. Im optionalen dritten Datensatz können (insbesondere stückzahl- und/oder flächenspezifische) Verbindungsbeiträge zu dem Produktparameter (z.B. PP1) für die zu schaffenden Verbindungen zwischen den einzelnen Teilobjekten bereitgestellt werden. Im optionalen vierten Datensatz können Kostenbeiträge bereitgestellt werden, welche insbesondere auch mengenspezifisch sein können. Wesentlich ist, dass zumindest die ersten beiden Datensätze D1 und D2 als Grundlage für die Bestimmung der Wertzahl des wenigstens einen Produktparameters PP1 verfügbar sind.

Mittels der Ökodesign-Engine 5 wird wenigstens ein umweltrelevanter Produktparameter PP1 und bevorzugt eine Mehrzahl solcher Produktparameter PP1, PP2, usw. bestimmt. Dabei kann es sich vorteilhaft um ein oder mehrere Parameter aus der oben genannten ersten Liste und/oder der oben genannten zweiten Liste handeln. Diese Produktparameter sind besonders relevant, um ein umweltgerechtes Produktdesign zu quantifizieren und insbesondere die Einhaltung der oben zitierten EU-Verordnung und der daraus resultierenden weiteren Normen beim Produktdesign nachzuweisen. Die Produktparameter aus den ersten beiden Listen sind besonders geeignet, um gemäß Schritt d) des erfindungsgemäßen Verfahrens ermittelt zu werden. So kann die Wertzahl eines entsprechenden ersten Produktparameters PP1 insbesondere auf folgende Weise ermittelt werden:

$$PP1 = M_g + P_g + \ldots$$

Dabei ist $M_g$ ein Gesamt-Materialbeitrag, der sich als Summe der Teil-Materialbeiträge $M_j$ der einzelnen Teilobjekte j ergibt. Die einzelnen Teil-Materialbeiträge $M_j$ ergeben sich für das jeweilige Teilobjekt j als:

$$M_j = v_j * mb_j,$$

also als Produkt aus der Materialmenge $v_j$ für das Teilobjekt j und dem zugehörigen mengenspezifischen Materialbeitrag $mb_j$, der je nach Materialtyp $m_j$ und je nach zu bestimmendem Produktparameter einen unterschiedlichen Wert aufweisen kann. In analoger Weise ist $P_g$ ein Gesamt-Prozessbeitrag, der sich als Summe der Teil-Prozessbeiträge $P_j$ der einzelnen Teilobjekte j ergibt. Die einzelnen Teil-Prozessbeiträge $P_j$ ergeben sich für das jeweilige Teilobjekt j als:

$$P_j = v_j * pb_j,$$

also als Produkt aus der Materialmenge $v_j$ für das Teilobjekt j und dem zugehörigen mengenspezifischen Prozessbeitrag $pb_j$. Dieser kann je nach zugeordnetem Herstellungsprozess $p_j$ und je nach zu bestimmendem Produktparameter einen unterschiedlichen Wert aufweisen. Außerdem kann sein Wert auch vom zugeordneten Material $m_j$ abhängig sein.

Die Summierung zur Ermittlung der Wertzahl des Produktparameters PP1 kann optional noch weitere Terme enthalten, insbesondere einen Summanden $V_g$, welcher einem Gesamt-Verbindungsbeitrag zu diesem Produktparameter PP1 entspricht. Dieser Gesamt-Verbindungsbeitrag kann sich als Summe von Einzelbeiträgen $V_k$ für die im Produkt vorliegenden Verbindungen k einzelner Teilobjekte j ergeben, wobei wiederum pauschale Einzelbeiträge und/oder flächenspezifische Einzelbeiträge für den jeweiligen Verbindungstyp $v_k$ berücksichtigt werden können. Zusätzlich zu den Produktparametern gemäß der ersten und/oder zweiten Liste können auch Produktparameter gemäß der dritten Liste bestimmt werden. Die Bestimmung solcher weiterer Produktparameter kann zweckmäßig basierend auf einem Zähler erfolgen, welcher abhängig von den Eigenschaften der jeweiligen Teilobjekte und/oder Objektverbindungen inkrementiert wird. Die Wertzahl eines solchen Produktparameters kann dann in Abhängigkeit von dem Endergebnis des Zählerwerts zugeordnet werden.

Das beschriebene Verfahren und das zugehörige Computerprogrammprodukt ermöglichen eine vergleichsweise genaue quantitative Bestimmung von wenigstens einem umweltrelevanten Produktparameter, die insbesondere bereits in einem frühen Stadium des Designprozesses anwendbar ist. Dies wird insbesondere dadurch erreicht, dass Informationen zu den eingesetzten Materialtypen und den damit verknüpften Herstellungsprozessen bereits zusammen mit der Produktgeometrie zur Verfügung gestellt werden und die Beiträge zu dem betrachteten Produktparameter material- und/oder prozessspezifisch parametrisiert werden. Wenn in einem frühen Designstadium nur eine ungefähre Geometrie bekannt ist und die Detailkonturen noch nicht ausgeformt sind, so kann trotzdem über die Angabe einer Materialmenge und durch Nutzung von statischen material- und prozessspezifischen Beiträgen zum jeweiligen Parameter eine quantitative Bewertung der relevanten Produktparameter vorgenommen werden. In ähnlicher Weise können quantitative Bewertungen vorgenommen werden, wenn nur eine Materialklasse bekannt ist und noch nicht das spezifische Material oder wenn nur eine Prozessklasse bekannt ist und noch nicht der spezifische Herstellungsprozess. Auch ermöglicht es die Erfindung, durch Variation von Geometrie-, Material- und Prozessparametern den Einfluss dieser Größen auf umweltrelevante Produktparameter sichtbar zu machen und das Produktdesign schon in einem frühen Stadium in Richtung einer umweltfreundlichen Ausgestaltung zu lenken. Das erfindungsgemäße Verfahren kann allgemein vorteilhaft auch auf Teil-Komponenten eines späteren kommerziellen Produkts angewendet werden, z.B. wenn in einem frühen Stadium des Produktdesigns nur die benötigten Daten für Teile des späteren Produkts vorliegen oder wenn diese separat bewertet werden sollen.

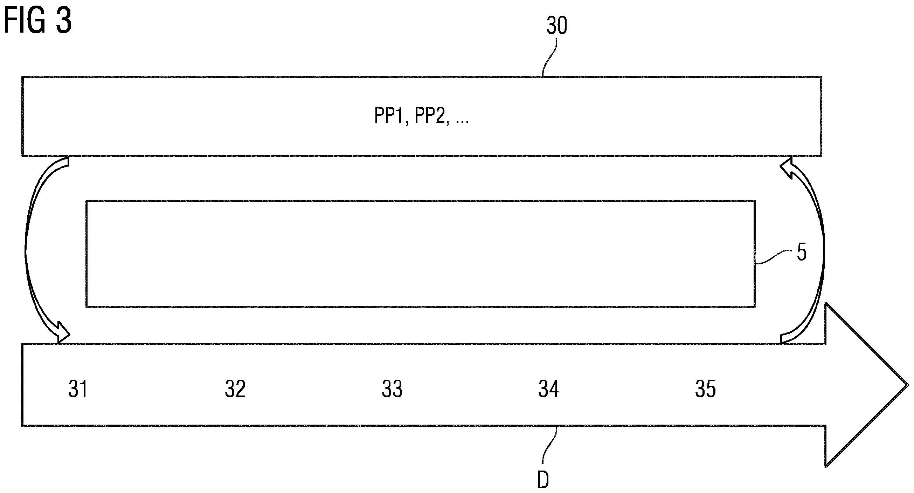

Figur 3 visualisiert diesen Vorteil durch ein schematisches Diagramm, welches verschiedene Designphasen eines Produktdesign-Prozesses zeigt. So deutet der Pfeil D wiederum die Richtung eines fortschreitenden Designstadiums D an. Das früheste Designstadium ist dabei das Konzept-Stadium 31, gefolgt vom Demonstrator-Stadium 32, dem Prototypen-Stadium 33, dem (im Wesentlichen) fertigen Design 34 und dem sogenannten Design Freeze 35, bei dem keinerlei Änderungen am Produktdesign mehr vorgenommen werden dürfen. Wie durch den oben dargestellten Balken 30 angedeutet, kann in all diesen Designstadien D eine Ökodesign-Bewertung im Hinblick auf ein oder mehrere ausgewählte Produktparameter P1, P2 usw. vorgenommen werden, und zwar unter Verwendung der oben beschriebenen Ökodesign-Engine 5. Die beiden runden Pfeile sollen andeuten, dass sich während des gesamten Produktdesign-Prozesses eine gegenseitige Beeinflussung von Weiterentwicklungen am Produktdesign und sich daraus ergebenden veränderten Messzahlen der umweltrelevanten Produktparameter PP1, PP2, usw. ergibt. Ein Vorteil der quantitativen Bewertungsmöglichkeit ist, dass vom Produktmanagement quantitative Zielvorgaben gesetzt werden können, deren (wahrscheinliche) Erreichung durch die Produktdesigner bereits in frühen Designstadien kontinuierlich überprüft werden kann.

Die Anmelderin weist an dieser Stelle darauf hin, dass unabhängig vom grammatikalischen Geschlecht eines bestimmten personenbezogenen Begriffs stets Personen mit männlicher, weiblicher und anderer Geschlechteridentität mit umfasst sein sollen.

Bezugszeichenliste

| 1 | Produkt |
|---|---|
| 2 | CAD-Entwicklungsumgebung |
| 3 | graphische Benutzeroberfläche (GUI) |
| 5 | Ökodesign-Engine |
| 7 | Datenbank |
| 30 | Ökodesign-Bewertung |
| 31 | Konzept-Stadium |
| 32 | Demonstrator-Stadium |
| 33 | Prototypen-Stadium |
| 34 | fertiges Design |
| 35 | Design-Freeze |
| D | Designstadium |
| D1 | erster Datensatz (mengenspezifische Materialbeiträge) |
| D2 | zweiter Datensatz (mengenspezifische Prozessbeiträge) |
| D3 | dritter Datensatz (Verbindungsbeiträge) |
| D4 | vierter Datensatz (Kostenbeiträge) |
| $\Delta K$ | mögliche Verbesserung ökologischer Kenngrößen |
| G | Genauigkeit der Bestimmung ökologischer Kenngrößen |
| GEO | Geometriedatensatz |
| $m_1, m_2$ | Materialtypen |
| $p_1, p_2$ | Herstellungsprozesse |
| PP1,PP2 | umweltrelevante Produktparameter |
| T | Bewertungswerkzeug |
| T1 | Richtlinie |
| T2 | Liste gefährlicher Stoffe |
| T3 | Design-Standard |
| T4 | MET-Matrix |
| T5 | Checkliste |
| T6 | verkürzte LCA |
| T7 | Ökologische Kostenanalyse |
| T8 | volle LCA |
| $v_1, v_2$ | Materialmengen |

**Patentansprüche**

1. Verfahren zur Ermittlung wenigstens eines Produktparameters (PP1) für ein Produkt (1),

wobei durch den Produktparameter (PP1) eine Ökodesign-Anforderung quantifiziert ist, wobei das Verfahren die folgenden Schritte umfasst:

a) Bereitstellen eines Geometriedatensatzes (GEO) für das Produkt (1) innerhalb einer Entwicklungsumgebung (2) für rechnerunterstütztes Konstruieren,
wobei das Produkt (1) innerhalb des Geometriedatensatzes (GEO) in eine Mehrzahl von Teilobjekten unterteilt ist, und wobei zum jeweiligen Teilobjekt ein zugehöriger Materialtyp ($m_1, m_2$) und eine Angabe über einen zugehörigen Herstellungsprozess ($p_1, p_2$) festgelegt wird,
b) Bereitstellen eines ersten Datensatzes (D1), welcher für eine Vielzahl von Materialtypen ($m_i$) jeweils zugeordnete mengenspezifische Materialbeiträge ($mb_i$) für den zu ermittelnden Produktparameter (PP1) enthält,
c) Bereitstellen eines zweiten Datensatzes (D2), welcher für eine Vielzahl von möglichen Herstellungsprozessen ($p_i$) jeweils zugeordnete mengenspezifische Prozessbeiträge ($pb_i$) für den zu ermittelnden Produktparameter (PP1) enthält,
d) Ermitteln einer absoluten Wertzahl des Produktparameters (PP1) innerhalb der Entwicklungsumgebung (2) für rechnergestütztes Konstruieren durch Berücksichtigung von zumindest einem Gesamt-Materialbeitrag ($M_g$) und einem Gesamt-Prozessbeitrag ($P_g$), wobei der Gesamt-Materialbeitrag ($M_g$) auf Basis einer Summierung über Teil-Materialbeiträge ($M_j$) der einzelnen Teilobjekte gebildet wird und sich diese jeweils als Produkt der Materialmenge ($v_j$) im Teilobjekt und eines dem jeweiligen Materialtyp ($m_j$) zugeordneten mengenspezifischen Materialbeitrags ($mb_j$) ergeben,
wobei der Gesamt-Prozessbeitrag ($P_g$) auf Basis einer Summierung über Teil-Prozessbeiträge ($P_j$) der einzelnen Teilobjekte gebildet wird und sich diese für das jeweilige Teilobjekt als Produkt der Materialmenge ($v_j$) und des dem jeweiligen Herstellungsprozess ($p_j$) zugeordneten mengenspezifischen Prozessbeitrags ($pb_j$) ergeben.

2. Verfahren nach dem vorhergehenden Anspruch, bei welchem insgesamt eine Mehrzahl von Produktparametern (PP1, PP2) ermittelt wird, durch welche jeweils eine Ökodesign-Anforderung quantifiziert ist.

3. Verfahren nach Anspruch 1 oder 2, bei welchem der wenigstens eine durch das Verfahren ermittelte Produktparameter (PP1) eine materialbezogene Größen aus der folgenden ersten Liste ist:

- ein Gehalt an recycelten Materialien,
- ein Gehalt an recyclingfähigen Materialien, insbesondere gewichtet mit ihrer Recyclingquote,

- ein Gehalt an Stoffen vordefinierter Stoffklassen, insbesondere ein Gehalt gefährlicher Stoffe, besorgniserregender Stoffe, von Additiven und/oder Verunreinigungen,
- eine Menge an bei der Herstellung entstehenden Abfallstoffen,
- eine Menge an bei der Herstellung insgesamt eingesetzten Ausgangsstoffen und Hilfsstoffen.

4. Verfahren nach einem der vorhergehenden Ansprüche, bei welchem der wenigstens eine durch das Verfahren ermittelte Produktparameter (PP1) eine der Größe aus der folgenden zweiten Liste ist:

- eine bei der Herstellung benötigte Prozessenergie und/oder ein bei der Herstellung anfallender Energieverlust,
- eine Menge an bei der Herstellung freigesetzten schädlichen Stoffen, insbesondere an flüchtigen organischen Verbindungen,
- eine für die Herstellung benötigte Wassermenge,
- ein mit der Herstellung zusammenhängender Umweltfussabdruck, insbesondere ein $CO_2$-Fußabdruck.

5. Verfahren nach einem der Ansprüche 3 oder 4, bei welchem zusätzlich zu dem wenigstens einen Produktparameter (PP1) entsprechend der ersten und/oder zweiten Liste wenigstens eine der Größen aus der folgenden dritten Liste ermittelt wird:

- eine Anzahl an verwendeten Komponenten,
- eine Anzahl an unterschiedlichen verwendeten Arten von Komponenten,
- eine Anzahl an unterschiedlichen verwendeten Typen von Materialien,
- eine Anzahl an unterschiedlichen verwendeten Typen von Objektverbindungen,
- eine Anzahl von benötigten Zerlegungsschritten für ein Produktrecycling,
- eine mittlere Anzahl von Komponenten, die bei einem Zerlegungsschritt freigelegt wird,
- eine Information über ein oder mehrere Typen von verwendeten Objektverbindungen,
- eine Information über ein oder mehrere Typen von verwendeten Komponenten,
- eine Information über ein oder mehrere Typen von Werkzeugen für eine Zerlegung des Produkts,
- eine Information über einen bei der Verwendung benötigten Energietyp,
- eine Information über einen bei der Verwendung benötigter Typ von Betriebsmittel,
- eine Information über die Verwendung standardisierter Komponenten,
- eine erwartete Lebensdauer des Produkts,
- eine vorgesehene Anzahl von Serviceintervallen innerhalb der Lebensdauer.

6. Verfahren nach Anspruch 5, bei welchem die wenigstens eine Größe aus der dritten Liste dadurch ermittelt wird, dass für das jeweilige Teilobjekt eine Inkrementierung wenigstens eines für diese Größe charakteristischen Zählers geprüft wird und die Größe abhängig vom Endwert dieses wenigstens einen Zählers bestimmt wird.

7. Verfahren nach einem der vorhergehenden Ansprüche, bei welchem zu dem jeweiligen Teilobjekt die Zuordnung eines Materialtyps ($m_i$) und/oder eines Herstellungsverfahrens ($p_i$) durch eine Benutzereingabe erfolgt,

- wobei nach einer erfolgten Zuordnung des Materialtyps ($m_i$) eine Liste der hiermit kompatiblen Herstellungsverfahren ($p_i$) angezeigt wird oder
- wobei nach einer erfolgten Zuordnung des Herstellungsverfahrens ($p_i$) eine Liste der hiermit kompatiblen Materialtypen ($m_i$) angezeigt wird.

8. Verfahren nach einem der vorhergehenden Ansprüche, bei welchem der erste Datensatz (D1) zusätzlich wenigstens einen physikalischen Parameter für den jeweiligen Materialtyp enthält, insbesondere eine Dichte und/oder eine Festigkeit.

9. Verfahren nach einem der vorhergehenden Ansprüche, bei welchem der erste (D1) und/oder der zweite Datensatz (D2) in wenigstens einer Datenbank (7) außerhalb der Entwicklungsumgebung (2) bereitgestellt werden.

10. Verfahren nach einem der vorhergehenden Ansprüche, bei welchem die im zweiten Datensatz (D2) enthaltenen mengenspezifischen Prozessbeiträge ($pb_i$) in Abhängigkeit vom zugehörigen Materialtyp ($m_i$) unterschiedliche Werte aufweisen.

11. Verfahren nach einem der vorhergehenden Ansprüche, wobei beim Ermitteln der Wertzahl des Produktparameters (PP1) wenigstens ein zusätzlicher Beitrag ($V_g$) berücksichtigt wird, welcher von der Struktur der Teilobjekte innerhalb des Geometriedatensatzes (GEO) abhängt.

12. Verfahren nach einem der vorhergehenden Ansprüche, wobei beim Ermitteln der Wertzahl des Produktparameters (PP1) zusätzlich ein Gesamt-Verbindungsbeitrag ($V_g$) berücksichtigt wird, welcher durch Summierung über Teil-Verbindungsbeiträge ($V_k$) für die auszubildenden Verbindungen zwischen einzelnen Teilobjekten gebildet wird.

**13.** Verfahren nach Anspruch 12, bei welchem für die Verbindungen der einzelnen Teilobjekte jeweils ein Verbindungstyp ($v_j$) festgelegt wird, insbesondere durch eine Nutzereingabe.

**14.** Verfahren nach einem der vorhergehenden Ansprüche, bei welchem der wenigstens eine Produktparameter (PP1) für wenigstens zwei verschiedene Geometriedatensätze ermittelt wird, wobei das Verfahren den zusätzlichen Schritt aufweist:
e) Darstellung der Ergebnisse für den wenigstens einen ermittelten Produktparameter mittels einer graphischen Benutzeroberfläche (3), insbesondere als vergleichende Ansicht in Abhängigkeit von den zugrundeliegenden Geometriedatensätzen.

**15.** Computerprogrammprodukt umfassend Befehle, wobei die Befehle bei der Ausführung des Computerprogrammprodukts auf einem Computer diesen dazu veranlassen, das Verfahren gemäß einem der vorhergehenden Ansprüche auszuführen.

FIG 1

# FIG 2

EP 4 617 938 A1

## FIG 3

EP 4 617 938 A1

Europäisches
Patentamt

European
Patent Office

Office européen
des brevets

**EUROPÄISCHER RECHERCHENBERICHT**

**Nummer der Anmeldung**

EP 24 16 3569

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MELIHA HONIC ET AL: "Der BIM-basierte materielle Geb?udepass als Optimierungswerkzeug", 4. Februar 2019 (2019-02-04), BAUTECHNIK, WILEY INTERSCIENCE, HOBOKEN, USA, PAGE(S) 219 - 228, XP071801949, ISSN: 0932-8351 * Zusammenfassung * * Seite 220, Spalte 1, Absatz 1 * * Seite 220, Spalte 1, letzter Absatz - Spalte 2, Absatz 1 * * Seite 221, Spalte 1, Absatz 2 - Seite 222, Spalte 2, Absatz 1 * * Abbildungen 1-3,7-12 * ----- | 1-15 | INV. G06F30/20 G06Q10/30 ADD. B29B17/00 G06F119/20 G06F119/18 |
| A | EP 3 404 562 A2 (HOWATHERM KLIMATECH GMBH [DE]) 21. November 2018 (2018-11-21) * Zusammenfassung * * Absatz [0037] * ----- | 1-15 | |
| A | CN 114 707 342 A (INTELLIGENT MFG INSTITUTE OF HFUT) 5. Juli 2022 (2022-07-05) * Zusammenfassung * * Absatz [n0005] * * Absatz [n0007] * * Absatz [n0008] * ----- | 1-15 | **RECHERCHIERTE SACHGEBIETE (IPC)** G06F G06Q B29B |
| A | US 2008/249756 A1 (CHAISUPARASMIKUL PONGSAK [US]) 9. Oktober 2008 (2008-10-09) * Zusammenfassung * * Absatz [0038] - Absatz [0039] * * Absatz [0043] * * Absatz [0047] * * Absatz [0067] * * Absatz [0114] * ----- -/-- | 1-15 | |

Der vorliegende Recherchenbericht wurde für alle Patentansprüche erstellt

| Recherchenort | Abschlußdatum der Recherche | Prüfer |
|---|---|---|
| München | 2. August 2024 | Sohrt, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# EP 4 617 938 A1

| Europäisches Patentamt<br>European Patent Office<br>Office européen des brevets | **EUROPÄISCHER RECHERCHENBERICHT** | **Nummer der Anmeldung**<br><br>EP 24 16 3569 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Anonymous: "VERORDNUNG DES EUROPÄISCHEN PARLAMENTS UND DES RATES zur Schaffung eines Rahmens für die Festlegung von Ökodesign-Anforderungen für nachhaltige Produkte und zur Aufhebung der Richtlinie 2009/125/EG",<br><br>,<br>30. März 2022 (2022-03-30), Seiten 1-139, XP093191978,<br>Br?ssel, Belgien<br>Gefunden im Internet:<br>URL:https://eur-lex.europa.eu/resource.html?uri=cellar:bb8539b7-b1b5-11ec-9d96-01aa75ed71a1.0003.02/DOC_1&format=PDF<br>[gefunden am 2024-08-01]<br>* Seiten 57-68 *<br><br>- - - - - | 1-15 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 2. August 2024 | Sohrt, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 3569

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2024

| Im Recherchenbericht angeführtes Patentdokument | Datum der Veröffentlichung | Mitglied(er) der Patentfamilie | Datum der Veröffentlichung |
|---|---|---|---|
| EP 3404562 A2 | 21-11-2018 | DE 102017110912 A1<br>EP 3404562 A2 | 22-11-2018<br>21-11-2018 |
| CN 114707342 A | 05-07-2022 | KEINE | |
| US 2008249756 A1 | 09-10-2008 | KEINE | |

EPO FORM P0461

Für nähere Einzelheiten zu diesem Anhang : siehe Amtsblatt des Europäischen Patentamts, Nr.12/82